# EUROPEAN PATENT SPECIFICATION

(11) **EP 0 787 626 B1**
(45) Date of publication and mention of the grant of the patent: **16.05.2001**
(21) Application number: 97101396.6
(22) Date of filing: 29.01.1997
(51) Int. Cl.: B60R 16/02

(54) **Wire harness**
Kabelnetz
Faisceau de câbles

(30) Priority: 30.01.1996 JP 1430796
(43) Date of publication of application: 06.08.1997
(73) Proprietor: SUMITOMO WIRING SYSTEMS, LTD., Yokkaichi City Mie 510 (JP)
(72) Inventor: Shibata, Hideaki, c/o Sumitomo Wiring Systems Ltd., Yokkaichi-City, Mie. 510 (JP); Makito, Tamiyuki, c/o Sumitomo Wiring Systems Ltd., Yokkaichi-City, Mie. 510 (JP); Ikuta, Yuji, c/o Sumitomo Wiring Systems, Ltd., Yokkaichi-City, Mie. 510 (JP); Atsumi, Yasushi, c/o Sumitomo Wiring Systems, Ltd., Yokkaichi-City, Mie. 510 (JP)
(74) Representative: Kuhnen & Wacker

(56) References cited:
- EP-A- 0 666 172
- WO-A-95/05957
- DE-A- 4 407 406

## Description

### BACKGROUND OF THE INVENTION

The present invention relates to a wire harness having a structure for preventing the distortion of said wire harness an to a method of producing same.

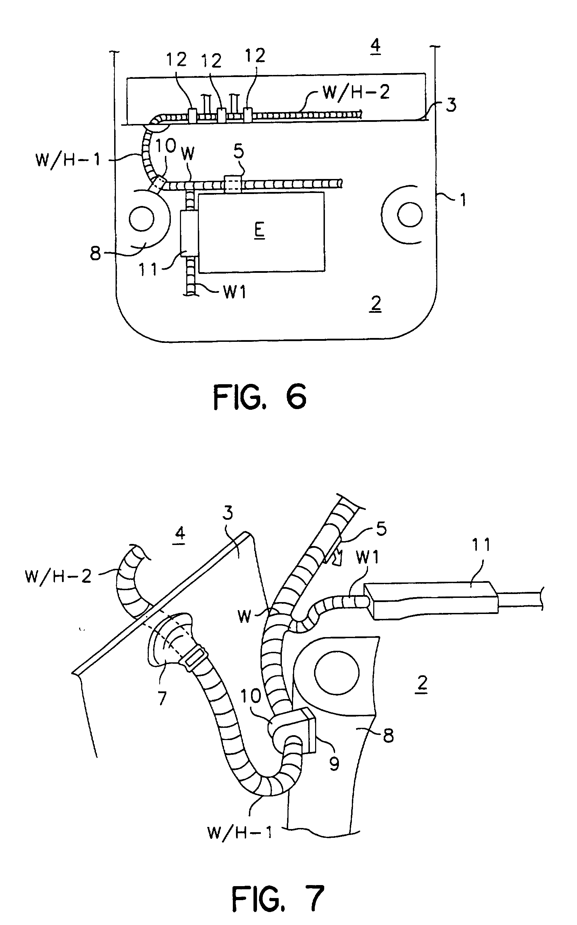

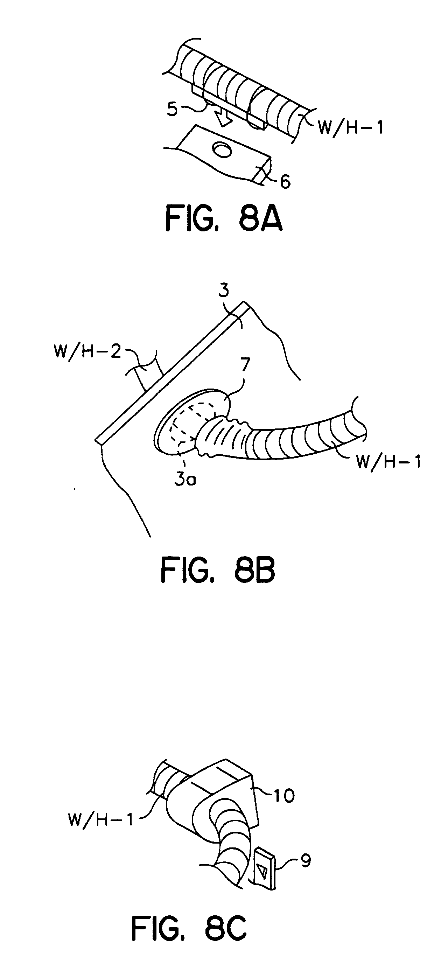

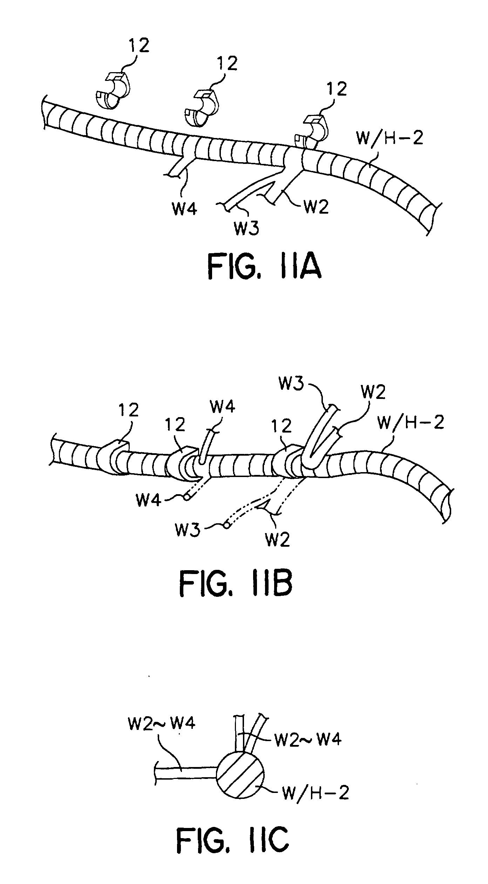

Hitherto, as shown in Figures 6 and 7, there is a wire harness W/H-1 penetrated from an instrument panel 3 to a compartment 4 as a wire harness W/H-1 installed at an engine room 2 of an automobile 1. In the engine room 2, the wire harness W/H-1 is installed, first of all, by inserting a bracket 6 of an engine E with a clamp 5 as shown in Figure 8(A) and fixing, successively, by penetrating it from the penetration hole 3a of the instrument panel 3 as shown in Figure 8(B) and fixing a grommet 7 by fitting to penetration hole 3a, and finally, by inserting a clamp 10 to a bracket 9 on a suspension tower 8 and fixing it as sjon in Figures 8(C) and 7. Reference numeral 11 designates a protector installed on the engine E. In the compartement 4 the wire harness W/H-2 is fixed with clamps 12. Said clamps 12 are closed after the wire harness W/H-2 is fitted in said switching-type clamps 12 as shown in Figure 11.

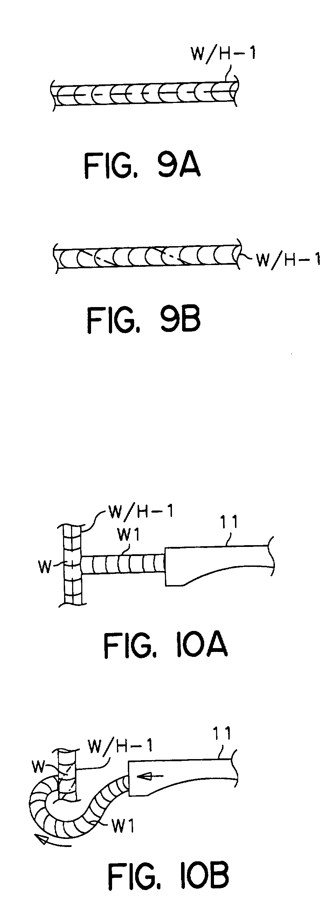

However, when at the time of installing the wire harness W/H-l in the engine room 2, the wire harness W/H-1 had been penetrated through the penetration hole 3a not in a usual state as shown in Figure 9(A) but in a state distorted as it is shown in Figure 9(B), and successively, the grommet 7 was fixed by fitting to penetration hole 3a, it has been a burden for a worker because it was necessary to fit in the penetration hole 3a while forcibly pulling the grommet 7. Besides, there was a fear that due to the effect of distortion of the wire harness W/H-1, the bracket 9 might be deformed by a clamp 10 finally inserted and fixed in the bracket 9. Moreover, when a branch part W of the wire harness W/H-1 is not in an usual state or undistorted state as shown in Figure 10(A) but in a state distorted as shown in Figure 10(B), a branch part W1 interferes with other parts due to a curvature according to tension by the distortion, and it becomes difficult to fix the protector 11 on the engine E because it is pulled and moved to the direction of the branch part W.

On the other hand, at the time of installing the wire harness W/H-2 in the compartment 4, when the wire harness W/H-2 is in the state distorted as it is as shown in Figures 11(B) and (C), the branch lines W2 to W4 for radio, meters, door-lock relays and the like deviate from the normal direction (refer to the real line of Figure 11(A) and the two-dot chain line of Figures 11(B) and (C)), and therefore they do not reach till the connector part of the radio and the like.

Furthermore, when a corrugate is covered on the wire harnesses W/H-1 and W/H-2 from a radius direction, the recognition of the distortion by said slit is possible because a slit of an axial direction is formed in the corrugate tube, but as the wire harnesses and the corrugate tube are usually the same colour (black) and the engine room 2 and the like are dark, it is very difficult to recognize the distortion of the slit.

From EP-A-0 666 172 a wire harness is known comprising a plurality of wires bundled together and surrounded by a cover, which is provided with symbols on the outside thereof so as to give some information concerning, for example, about the number of wires included within a bundle. Such symbols provided on the outside of the cover of the wire harness can include of course very small straight mark lines depending on the type of symbols used.

### SUMMARY OF THE INVENTION

It is an object of the present invention to provide a wire harness having a structure for preventing the distortion of the wire harness so that it can be accurately installed in an automobile. It is a further object of the present invention to provide a method for producing such a wire harness having a structure for preventing distortion. It is still a further object of the invention to provide a method of installing such a wire harness.

These objects are solved by a wire harness as defined in claim 1 and by methods as defined in claims 6 and 9.

Improved embodiments of the inventive wire harness result from the subclaims 2 to 5, whereas improved embodiments of the inventive methods result from the subclaims 7 and 8.

According to the invention at least one straight mark line is formed along an axis direction on the outside of the wire harness along at least a part of the length of wire harness such that in distorted position the mark line appears as a helical line and such that a worker can install the wire harness so that the mark line is maintained straight while watching the mark line. The coloring of the mark line differs from that of the perimeter plane (the outside of the wire harness) so that the mark line is clearly visible even in dull surrounding like in the engine compartment of an automobile.

According to an aspect of the present invention distortion of a wire harness upon installing it, e.g. in an automobile, can be prevented. A worker only installs it so that the mark line is maintained straight while watching the mark line on the perimeter plane of the cover of the wire harness, preferable made of protective material by eyes, and the wire harness is able to be accurately installed into an automobile so as not to be distorted. Therefore, problems derived from the distortion of the wire harness can be solved at a stroke.

When a worker installs the wire harness in accordance with the present invention, he can accurately install the wire harness in an automobile without distortion, only by installing it so that the mark line may be straight while he watches by eyes the mark line which is conspicuous due to a coloring differing from that of said perimeter plane of the wire harness.

The mark line can be formed by coating with a marker pen, by a paint, or formed by adhering an adhesive tape for coloring. Thus the mark line can be briefly and rapidly formed.

According to the present invention such a wire harness can be produced by:
a) providing a wire harness with a plurality of wires bundeld together an surrounded by a cover in the usual way;
b) removably fixing a drawing plate with a straight elongated slit on the wire hareness, said slit in parallel to the lenght axis of the wire harness; and
c) inserting a marker pen into slit and drawing a marker line on the cover (T) of the wire harness by moving the marker pen along the slit.

### BRIEF DESCRIPTION OF DRAWINGS

Figure 1
   Cross-eyed view of the structure for preventing the distortion of the wire harness in the engine room of the present invention;
Figure 2
   Cross-eyed view of the wire harness where the mark line is formed;
Figure 3 (A) to (C)
   Cross-eyed view of the fixed structure of each parts of the wire harness;
Figure 4
   Cross-eyed view of the structure for preventing the distortion of the wire harness in the compartment;
Figure 5 (A)
   Cross-eyed view of a method for forming the mark line;
Figure 5 (B)
   sectional view of Figure 5(A);
Figure 6
   Sketch plan view illustrating the engine room and compartment of an automobile;
Figure 7
   Cross-eyed view of the fixed structure of the wire harness in a traditional engine room;
Figure 8 (A) to (C)
   cross-eyed view of the fixed structure of each parts of the wire harness;
Figure 9 (A) and (B)
   side views illustrating the distortion at a linear part of the wire harness;
Figure 10 (A) and (B)
   side views illustrating the distortion at a branch part of the wire harness;
Figure 11 (A), (B) and (C)
   Cross-eyed view of the fixed structure of the wire harness in the compartment:
   (A) is the cross-eyed view before fixed by the clamp,
   (B) is the cross-eyed view after fixed by the clamp, and
   (C) is the sectional view of the wire harness illustrating the branch line deviated from the normal direction.

### DESCRIPTION OF PREFERRED EMBODIMENT

As to the general structure of a wire harness and its use in an autombile reference is made to the description of Figs. 6 to 11 and a detailed description is omitted here. Furthermore, the same designation marks are used for designating corresponding parts.

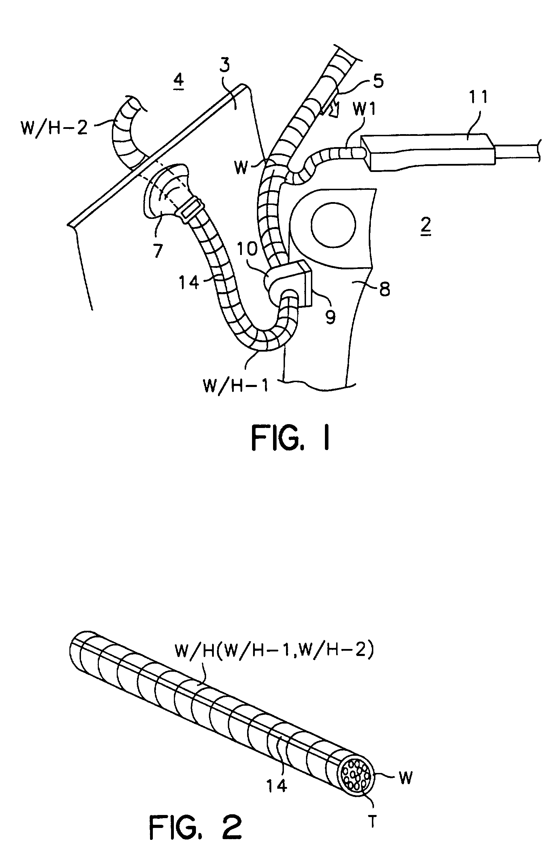

As shown in Figure 2, at the tape bundling a number of wires W of wire harnesses W/H (W/H-1, W/H-2), or at the perimeter plane of the protective material T such as the corrugate tube and the like covering the perimeter of said tape, the straight mark line 14 is formed along an axis direction with a conspicuous coloring (for example, white and yellow) differing from that (for example, black) of said perimeter plane of said protective material.

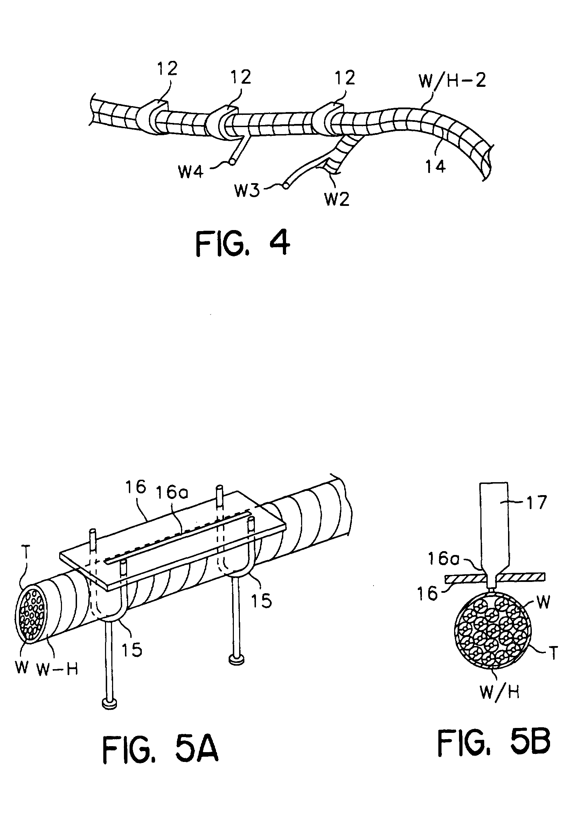

As shown in Figure 5, the wire harnesses W/H is set on U-letter shaped holders 15. On the open U-shaped portions of the holders 15 a drawing plate 16 is fixed having a straight long hole 16a as a form for applying the mark line 14 and a guidance for a marker pen 17, respectively. The drawing plate 16 and the wire harness W/H are aligned with respect to each other so that the long hole 16a is parallel to the longitudinal axis of the wire harness W/H. By fitting the marker pen 17, e. g. white or or yellow color, in the long hole 16a of said plate 16 and moving the marker pen 17 along the long hole 16a, the mark line 14 being straight to the axis direction can be briefly and rapidly formed on the perimeter plane of the protective material T for the wire harnesses W/H.

The straight mark line 14 may be a single mark line along the length of the wire harnes W/H or a plurality of straight mark lines. The plurality of mark lines may run parallel to each other. One or a plurality of mark lines may be provided at different locations around the perimeter in different sections of the wire harness W/H. It is usually sufficient to form the mark line(s) in critical sections along the length of the wire harness which tend to be distorted. The specific location of the mark line(s) on the perimeter of the cover is chosen so that the mark line(s) is(are) visible for the worker upon installation of the wire harness. Different colors in different sections of the wire harness and for different ones of the plurality of mark lines may be used.

In place of the above-mentioned marker pen 17, a brush or a roller containing paint may be used. Furthermore, an adhesive tape for coloring may be adhered instead of the paint. It is unnecessary that the above-mentioned mark line 14 is formed over the full length of the wire harnesses W/H, i. e. it is sufficient that the mark line 14 is formed only on that parts of the wire harnesses W/H which may be distorted upon installation.

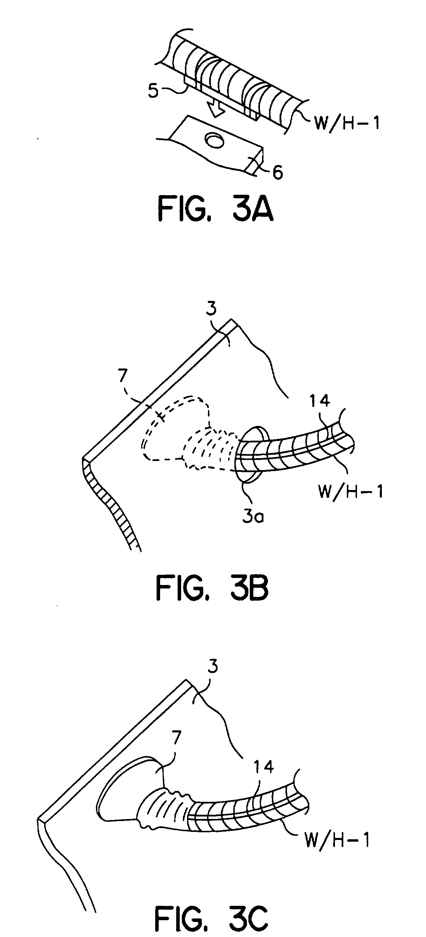

As shown in Fig. 1 with a wire harness W/H-1 in an engine room 2, the mark line 14 is formed on the perimeter plane of the protective material or cover T for the wire harnesses W/H-1 between the clamps 5 and the grommet 7. When the wire harness W/H-1 is installed, first of all, it is inserted in the bracket 5 of the engine E and fixed by the clamp 5 as shown in Figure 3(A). Thereafter, it is penetrated to the compartment 4 with the grommet 7 through a penetration hole 3a of an instrument panel 3 as shown in Figure 3(B). Finally, the wire harness W/H is fixed at the penetration hole 3a by fitting while pulling back the grommet 7.

Before the grommet 7 is fixed in the penetration hole 3a by fitting, that is, in the state of Figure 3(B), while watching the mark line 14 on the perimeter plane of the wire harness W/H-1 by eyes, it is recognised whether the mark line 14 is straight or not. If it is straight, the wire harness W/H-1 is not distorted, and therefore it is enough that the grommet 7 is fixed in the penetration hole 3a by fitting as it is.

If the mark line 14 is not straight but distorted, the wire harness W/H-1 is also distorted, and therefore, the wire harness W/H-1 is rectified to its not distorted state and only thereafter the grommet 7 is fixed in the penetration hole 3a.

As it can be accurately installed so that the wire harness W/H-1 between the clamp 5 and the grommet 7 may not be distorted in the manner mentioned above, the dimension of the wire harness W/H-1 between the clamp 5 and the grommet 7 does not become short, and therefore the burden of a worker is reduced because it becomes unnecessary to fit in the penetration hole 3a while forcibly pulling the grommet. Furthermore, as the distortion of the wire harness W/H-1 does not affect the clamp 10 where the bracket 9 is finally inserted and fixed, there is no danger that the bracket 9 is deformed.

Moreover, as the branch part W of the wire harness W/H-1 is also not distorted, the branch part W1 does not interfere with other parts and it can be easily carried out to fix the protector 11 on the engine E. On the other hand, in case of the wire harness W/H-2 in the compartment 4, the mark line 14 is formed in similar manner mentioned above on the perimeter plane of the wire harness W/H-2 as shown in Figure 4.

Before the wire harness W/H-2 mentioned above is fixed in each of the switching type clamps 12, while watching the mark line 14 on the perimeter plane of the wire harness W/H2 by eyes, it is recognised whether the mark line 14 is straight or not. If it is straight, the wire harness W/H-2 is not distorted, and therefore it is enough that each of the clamps 12 is fixed as it is. If the mark line 14 is not straight but distorted, the wire harness W/H-2 is also distorted, and therefore, each of the clamps 12 is fixed by closing only after rectifying so that the wire harness W/H-2 may be straight. As it can be accurately installed to each of clamps 12 so that the wire harness W/II-2 may not be distorted in the manner mentioned above, the branch lines W2 to W4 for a radio, meters, door-lock relays and the like do not deviate from the normal direction, and therefore they accurately reach until the connector part of the radio and the like, and the coupling of a connector can be easily performed.

### LIST OF DESIGNATION MARKS

- W/H-1:: Wire harness of the engine room
- W/H-2:: Wire harness of the compartment
- W:: Wire
- T:: Cover, e. g. protective material for the wire harness, a bundling tape, a corrugate tube and the like
- 5 :: Clamp
- 7:: Grommet
- 10:: Clamp
- 12:: Clamp
- 14:: Mark line
- 16:: Plate for lining
- 17:: Marker pen

## Claims

1. A wire harness (W/H-1, W/H-2) comprising a plurality of wires (W) bundled together and surrounded by a cover (T),
**characterized** in that at least one straight mark line (14) is formed along at least a part of the length in axial direction of the wire harness on a perimeter plane of the cover (T) such that in distorted position the mark line appears as a helical line and such that a worker can install the wire harness so that the mark line is maintained straight while watching the mark line, said mark line (14) having a coloring differing from that of said perimeter plane, so that existence of a distortion can be discriminated according to whether that mark line (14) is a straight line or not.

2. The wire harness according to claim 1, characterized in that a plurality of straight mark lines are provided along along the length of the wire harness on the perimeter plane of the cover (T), said mark lines being provided at different locations on the perimeter plane of the cover (T).

3. The wire harness according to claim 1 or 2, characterized in that said mark line (14) is formed by coating applied with a marker pen.

4. The wire harness according to claim 1 or 2, characterized in that said mark line (14) is formed by a paint.

5. The wire harness according to claim 1 or 2, characterized in that said mark line (14) is formed by adhering an adhesive tape for coloring.

6. A method of producing a wire harness (WH-1, WH-2) as defined in anyone of the preceding claims 1 to 3, comprising the steps of:
a) providing a wire harness (WH-1, WH-2) with a plurality of wires (W) bundled together and surrounded by a cover (T);
b) removably fixing a drawing plate (16) with a straight elongated slit (16a) on the wire harness (WH-1, WH-2), said slit (16a) in parallel to the length axis of the wire harness; and
c) inserting a marker pen (17) into slit (16a) and drawing a marker line (14) on the cover (T) of the wire harness (WH-1, WH-2) by moving the marker pen (17) along the slit (16a), wherein a straight mark line is formed such that in distorted position the mark line appears as a helical line and such that a worker can install the wire harness so that the mark line is maintained straight while watching the mark line.

7. Method of producing a wire harness in accordance with claim 6, characterized in that step b) comprises the substeps:
b1) fitting at least a portion of the wire harness (W/H-1, W/H-2) into at least two u-shaped holders (15);
b2) covering the wire harness (W/H-1, W/H-2) in the holders (15) with the drawing plate (16); and
b3) aligning the wire harness (W/H-1, W/H-2) with its lenght axis in parallel to the straight slit (16a).

8. Method of producing a wire harness in accordance with claim 6 or 7, characterized in that steps b) and c) are repeated.

9. A method of installing a wire harness (W/H-1, W/H-2) as defined in anyone of claims 1 to 5,
said wire harness (W/H-1, W/H-2) having a normal position, wherein said wire harness (W/H-1, W/H-2) is untwisted, its branches (W1, W2, W3, W4) are of sufficient length to reach their intended connection points, and said mark line (14) appear as a straight line,
and a distorted position, wherein said harness (W/H-1, W/H-2) has been twisted so that said branches (W1, W2, W3, W4) are of insufficient length to reach said connection points, and said mark line appears as a helical line, said method comprising
counter rotating said wire harness (W/H-1, W/H-2) to a position at which said mark line (14) appearing as a helical line (14) becomes said straight line (14) and thereafter installing said harness (W/H-1, W/H-2).

## Patentansprüche

1. Kabelbaum (W/H-1, W/H-2) mit einer Vielzahl an Drähten (W), die miteinander gebündelt sind und durch einen Mantel (T) umschlossen sind,
dadurch **gekennzeichnet,** daß
wenigstens eine geradlinige Markierungslinie (14) entlangt wenigstens einem Teil der Länge in der axialen Richtung des Kabelbaums an einer Umfangsebene des Mantels (T) in solcher Weise ausgebildet ist, daß in einer verdrehten Position die Markierungslinie als eine Spirallinie erscheint und derart, daß ein Arbeiter den Kabelbaum installieren kann, so daß die Markierungslinie gerade gehalten wird während er auf die Markierungslinie blickt, wobei die Markierungslinie (14) eine Farbe aufweist, die von derjenigen der Umfangsebene verschieden ist, so daß die Existenz einer Verdrehung daran diskriminiert werden kann, ob die Markierungslinie (14) geradlinig ist oder nicht.

2. Kabelbaum nach Anspruch 1,
dadurch **gekennzeichnet,** daß
eine Vielzahl an geradlinigen Markierungslinien entlang der Länge des Kabelbaums an der Umfangsebene des Mantels (T) vorgesehen sind, wobei die Markierungslinien an unterschiedlichen Stellen auf der Umfangsebene des Mantels (T) vorgesehen sind.

3. Kabelbaum nach Anspruch 1 oder 2,
dadurch **gekennzeichnet,** daß
die Markierungslinie (14) durch einen Auftrag, der mit einem Markierungsstift aufgebracht wird, versehen ist.

4. Kabelbaum nach Anspruch 1 oder 2,
dadurch **gekennzeichnet,** daß
die Markierungslinie (14) durch einen Anstrich gebildet ist.

5. Kabelbaum nach Anspruch 1 oder 2,
dadurch **gekennzeichnet,** daß
die Markierungslinie (14) durch Ankleben eines Klebestreifens für eine Farbgebung ausgebildet ist.

6. Verfahren zur Herstellung eines Kabelbaums (WH-1, WH-2) nach irgendeinem der vorgehenden Ansprüche 1 bis 3, mit den folgenden Schritten:
a) Vorsehen eines Kabelbaums (WH-1, WH-2) mit einer Vielzahl von Drähten (W), die zusammengebündelt sind und durch einen des Mantels (T) umgeben sind;
b) Befestigen einer Ziehplatte (16) in entfernbarer Form mit einem geradlinigen langgestreckten Schlitz (16a) auf dem Kabelbaum (WH-1, WH-2), wobei der Schlitz (16a) parallel zur Längsachse des Kabelbaums verläuft; und
c) Einführen eines Markierstiftes (17) in den Schlitz (16a) und Ziehen einer Markierlinie (14) auf dem Mantel (T) des Kabelbaums (WH-1, WH-2) durch Bewegen des Markierstiftes (16) entlang dem Schlitz (16a), wobei eine geradlinige Markierungslinie derart ausgebildet wird, daß in einer verdrehten Position die Markierungslinie als eine Spirallinie erscheint und derart, daß ein Arbeiter den Kabelbaum derart installieren kann, daß die Markierungslinie geradlinig gehalten wird während er die Markierungslinie beobachtet.

7. Verfahren zur Herstellung eines Kabelbaums nach Anspruch 6,
dadurch **gekennzeichnet,** daß
der Schritt b) die folgenden Unterschritte umfaßt:
b1) Einpassen von wenigstens einem Abschnitt des Kabelbaums (W/H-1, W/H-2) in wenigstens zwei u-gestaltete Halter (15);
b2) Bedecken des Kabelbaums /W/H-1, W/H-2) in den Haltern (15) mit der Ziehplatte (16); und
b3) Ausrichten des Kabelbaums (W/H-1, W/H-2) mit seiner Längsachse parallel zu dem geradlinigen Schlitz (16a).

8. Verfahren zur Herstellung eines Kabelbaums nach Anspruch 6 oder 7,
dadurch **gekennzeichnet,** daß
die Schritte b) und c) wiederholt werden.

9. Verfahren zum Installieren eines Kabelbaums (W/H-1, W/H-2) nach irgendeinem der Ansprüche 1 bis 5, wonach
der Kabelbaum (W/H-1, W/H-2) eine normale Position einnimmt, bei der der Kabelbaum (W/H-1, W/H-2) unverdreht ist und dessen Drahtzweige (W1, W2,W3, W4) eine ausreichende Länge haben, um ihre beabsichtigten Verbindungspunkte zu erreichen und wobei die Markierungslinie (14) als eine geradlinige Linie erscheint,
und eine verdrehte oder verzerrte Position hat, bei der der Kabelbaum (W/H-1, W/H-2) verdreht wurde, so daß die Drahtzweige (W1, W2, W3, W4) eine unzureichende Länge haben, um ihre Verbindungspunkte zu erreichen, und wobei die Markierungslinie als eine Spirallinie erscheint, welches Verfahren darin besteht, daß
der Kabelbaum (W/H-1, W/H-2) entgegengesetzt in eine Position gedreht wird, bei der die Markierungslinie (14), die als eine Spirallinie (14) erscheint, zu einer geradlinigen Linie (14) wird, und daß danach der Kabelbaum (W/H-1, W/H-2) installiert wird.

## Revendications

1. Faisceau de câbles (W/H-1, W/H-2) comprenant une pluralité de câbles (W) groupés en faisceau et entourés par une gaine (T), caractérisé en ce qu'au moins une ligne droite de marquage (14) est formée le long d'au moins une partie de la longueur dans la direction axiale du faisceau de câbles sur une surface périmétrique de la gaine (T) de sorte que, à l'état déformé par torsion, la ligne de marquage apparaît comme une ligne hélicoïdale et de sorte qu'un ouvrier peut installer le faisceau de câbles d'une manière telle que la ligne de marquage reste droite lorsqu'on observe la ligne de marquage, la dite ligne de marquage (14) ayant une couleur différente de celle de la dite surface périmétrique, de sorte qu'on peut distinguer l'existence d'une déformation selon que la ligne de marquage (14) apparaît ou non comme une ligne droite.

2. Faisceau de câbles selon la revendication 1, caractérisé en ce qu'une pluralité de lignes droites de marquage sont prévues sur la longueur du faisceau de câbles, sur la surface périmétrique de la gaine (T), les dites lignes de marquage étant prévues à des endroits différents sur la surface périmétrique de la gaine (T).

3. Faisceau de câbles selon la revendication 1 ou 2, caractérisé en ce que la dite ligne de marquage (14) est formée par application d'un revêtement au moyen d'un crayon marqueur.

4. Faisceau de câbles selon la revendication 1 ou 2, caractérisé en ce que la dite ligne de marquage (14) est formée par une peinture.

5. Faisceau de câbles selon la revendication 1 ou 2, caractérisé en ce que la dite ligne de marquage (14) est formée par collage d'un ruban adhésif de couleur.

6. Procédé de fabrication d'un faisceau de câbles (W/H-1, W/H-2) selon une quelconque des revendications précédentes 1 à 3, comprenant les étapes de :
(a) préparation d'un faisceau de câbles (W/H-1, W/H-2) avec une pluralité de câbles (W) groupés en faisceau et entourés par une gaine (T) ;
(b) fixation démontable d'une plaque de tracé (16), comportant une fente rectiligne allongée (16a), sur le faisceau de câbles (W/H-1, W/H-2), la dite fente (16a) étant parallèle à l'axe longitudinal du faisceau de câbles ; et
(c) insertion d'un crayon marqueur (17) dans la fente (16a) et tracé d'une ligne de marquage (14) sur la gaine (T) du faisceau de câbles (W/H-1, W/H-2) par déplacement du crayon marqueur (17) le long de la fente (16a) afin d'obtenir une ligne droite de marquage de sorte que, à l'état déformé par torsion, la ligne de marquage apparaît comme une ligne hélicoïdale et un ouvrier peut installer le faisceau de câbles d'une manière telle que la ligne de marquage reste droite pendant qu'il observe la ligne de marquage.

7. Procédé de fabrication d'un faisceau de câbles selon la revendication 6, caractérisé en ce que l'étape (b) comprend les sous-étapes suivantes :
(b1) mise en place d'au moins une partie du faisceau de câbles (W/H-1, W/H-2) dans au moins deux supports en forme de U (15) ;
(b2) couverture du faisceau de câbles (W/H-1, W/H-2) placé dans les supports (15) avec la plaque de tracé (16) ; et
(b3) alignement du faisceau de câbles (W/H-1, W/H-2) de sorte que son axe longitudinal soit parallèle à la fente rectiligne (16a).

8. Procédé de fabrication d'un faisceau de câbles selon la revendication 6 ou 7, caractérisé en ce qu'on répète les étapes (b) et (c).

9. Procédé d'installation d'un faisceau de câbles (W/H-1, W/H-2) selon une quelconque des revendications 1 à 5, le dit faisceau de câbles (W/H-1, W/H-2) ayant un état normal, dans lequel le dit faisceau de câbles (W/H-1, W/H-2) ne subit pas de torsion, ses branchements (W1, W2, W3, W4) ont une longueur suffisante pour atteindre leurs points de connexion prévus, et la dite ligne de marquage (14) apparaît comme une ligne droite,
et un état déformé par torsion, dans lequel le dit faisceau de câbles (W/H-1, W/H-2) est tordu de sorte que les dits branchements (W1, W2, W3, W4) ont une longueur insuffisante pour atteindre les dits points de connexion, et la dite ligne de marquage apparaît comme une ligne hélicoïdale,
le dit procédé comprenant la rotation inverse du dit faisceau de câbles (W/H-1, W/H-2) jusqu'à un état dans laquelle la dite ligne de marquage (14), qui apparaissait comme une ligne hélicoïdale (14), devient une dite ligne droite (14), puis l'installation du dit faisceau de câbles (W/H-1, W/H-2).
